# EUROPÄISCHE PATENTSCHRIFT

(11) **EP 0 628 434 B1**
(45) Veröffentlichungstag und Bekanntmachung des Hinweises auf die Patenterteilung: **07.05.1997**
(21) Anmeldenummer: 94108516.9
(22) Anmeldetag: 03.06.1994
(51) Int. Cl.: B60C 9/00, B60C 15/04, B60C 15/06, B60C 9/18

(54) **Fahrzeugluftreifen**
Vehicle tyre
Bandage pneumatique pour véhicule

(30) Priorität: 07.06.1993 DE 4318825
(43) Veröffentlichungstag der Anmeldung: 14.12.1994
(73) Patentinhaber: Continental Aktiengesellschaft, 30165 Hannover (DE)
(72) Erfinder: Neddenriep, Thomas, D-29690 Schwarmstedt (DE); Frucht, Theodor, D-30655 Hannover (DE)

(56) Entgegenhaltungen:
- EP-A- 0 329 589
- EP-A- 0 416 638
- US-A- 5 198 050
- PATENT ABSTRACTS OF JAPAN vol. 11, no. 333 (M-637) 30. Oktober 1987 & JP-A-62 116 302 (BRIDGESTONE CORP.) 27. Mai 1987

## Beschreibung

Die Erfindung betrifft einen durch Konfektionierung hergestellten Fahrzeugluftreifen, insbesondere Reifen für Nutzfahrzeuge, mit einer ein- oder mehrlagigen Festigkeitsträgerkarkasse, die in den Wülsten durch Umschlingen von Wulstkernen verankert ist, mit Kernprofilen in den Wülsten mit einem Laufstreifen und mit einer Gürtelverstärkung zwischen Karkasse und Laufstreifen. Übliche Fahrzeugluftreifen für Nutzfahrzeuge weisen eine Karkasse aus Stahlcord sowie einen mehrlagigen Gürtel auf, der ebenfalls aus Stahlcord besteht. Schließlich sind auch die Wulstkerne aus Stahldrähten aufgebaut. Im Falle des Vorhandenseins von Wulstverstärkern bestehen diese ebenfalls häufig aus Stahlcordstreifen. Somit trägt der Werkstoff Stahl in einem erheblichen Umfang zum Gesamtgewicht des Reifens bei.

In jüngster Zeit hat die Recyclebarkeit von Altreifen eine erhöhte Bedeutung erlangt. Dabei bildet die Zerkleinerung der Reifen mit dem hohen Stahlcordanteil ein erhöhtes Problem. Schließlich ist es äußerst schwierig, den am Stahlcord anhaftenden Gummi vom Stahcord zu trennen.

Der Erfindung liegt deshalb die Aufgabe zugrunde, einen Fahrzeugluftreifen der eingangs genannten Art anzugeben, bei dem eine optimierte Recyclebarkeit ermöglicht wird.

Diese Aufgabe wird erfindungsgemäß dadurch gelöst, daß die Karkasse aus einem Aramidcordgewebe besteht, daß die Wulstkerne aus Aramidfäden aufgebaut sind und daß die Gürtelverstärkung sowie die Kernprofile aus kunstfaserverstärktem Gummi bestehen. Gemäß einer weiteren Lösung besteht die Gürtelverstärkung anstatt aus kunstfaserverstärktem Gummi aus in mehreren Lagen angeordneten Aramidfäden bzw. -corden.

Durch das Vorschlagen eines stahllosen Reifens entfällt beim Recycling des Altreifens die Trennung von Gummi und Stahlcord. Auch bei der Zerkleinerung des Reifens gibt es die bisher vorhandenen Probleme nicht mehr. Es wird möglich, eine pyrolytische oder hydrolytische Zersetzung des gesamten Reifenmaterials vorzunehmen.

In technischer Hinsicht ergibt sich der Vorteil einer Gewichtsreduzierung von ca. 25 % bei einem Lkw-Reifen sowie ein geringerer Rollwiderstand. Durch die erhebliche Reduzierung des Reifengewichts wird man in die Lage versetzt, eine höhere Zuladung zu ermöglichen. Der geringere Rollwiderstand führt zu einer Treibstoffeinsparung. Weiterhin ist als Vorteil zu nennen, daß durch die Verwendung von kunstfaserverstärktem Gummi an den verschiedenen Stellen des Reifens, insbesondere beim Gürtel ein Steifigkeitssprung zwischen diesen Teilen und dem benachbarten Gummi geringer wird, so daß die Gummibauteile in den genannten Bereichen in erheblichem Umfang geringer beansprucht werden.

Die Erfindung kommt mit all ihren Vorteilen, insbesondere bei Fahrzeugluftreifen für Nutzfahrzeuge zum Tragen, doch ist sie grundsätzlich auch bei Fahrzeugluftreifen für Pkw anwendbar.

Gemäß einer Ausgestaltung der Erfindung bestehen die Wulstverstärker des Reifens ebenfalls aus kunstfaserverstärktem Gummi. In den verschiedenen Reifenaufbauteilen kann der kunstfaserverstärkte Gummi einen Kunstfaseranteil von 10 bis 50 Gew.%, vorzugsweise von ca. 25 Gew.% aufweisen.

Als Kunststoffasermaterial kommt insbesondere Aramid in Frage, jedoch sind bei Bedarf selbstverständlich auch andere Kunststoffasern einsetzbar. Bei der Verwendung von Aramid erhält man den Vorteil, daß der gesamte Reifen nur ein einziges Kunststoffasermaterial aufweist, was beim Recycling zu erheblichen Vereinfachungen führt.

Die verwendeten Kunstfasern können eine Länge von 0,01 bis 6 mm aufweisen, wobei bevorzugt Fasern von 0,1 bis 2 mm Länge zum Einsatz kommen. Die Fasern können in unterschiedlichen Längen des angegebenen Bereichs, aber auch in einer bestimmten Länge vorliegen. Die Kunstfasern können in einer Dicke von 5 bis 100 µm vorliegen. Vor allem bei der Verwendung als Gürtelmaterial kann es vorteilhaft sein, die Kunstfasern in einer bestimmten Orientierung in die Gummiplatte einzubringen.

Nachfolgend wird ein Ausführungsbeispiel der Erfindung anhand einer Zeichnung näher erläutert. Es zeigt
- Fig. 1: einen Fahrzeugluftreifen für Nutzfahrzeuge in einem radialen Teilschnitt,
- Fig. 2: den Fahrzeugluftreifen der Fig. 1, jedoch mit einem Gürtel aus Aramidcordgewebe.

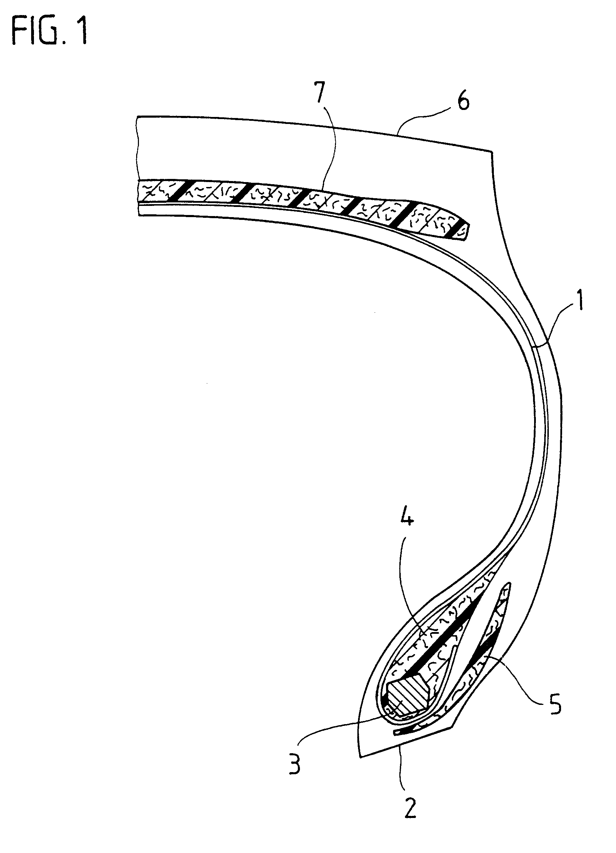

Der Reifen der Fig. 1 weist eine Karkasse 1 auf, die z. B. eine Radialkarkasse sein kann und aus Aramidcordgewebe besteht. Die Karkasse 1 ist in den Wülsten 2 durch Umschlingen von zugfesten Wulstkernen 3 verankert. Radial außen von den Wulstkernen 3 befinden sich auf jeder Seite je ein Kernprofil 4. Axial außen vom Wulstkern 3 und dem Kernprofil 4 ist je ein Wulstverstärker 5 angeordnet.

Zwischen der Karkasse 1 und dem Laufstreifen 6 befindet sich eine Gürtelverstärkung 7. Die Gürtelverstärkung 7 besteht aus kunstfaserverstärktem Gummi, bei dem als Kunststoffaser insbesondere Aramid zum Einsatz kommt. Bei der Konfektionierung des Reifens kann die Gürtelverstärkung 7 in Form von einer oder mehreren kunstfaserverstärkten Gummiplatten aufgelegt werden. Es können bis zu fünf Platten in Frage kommen. Die Kunststoffasern können in den einzelnen Platten in bestimmter Orientierung vorliegen.

Die Kernprofile 4 bestehen ebenfalls aus kunststoffaserverstärktem Gummi, wobei als Kunststoff wiederum bevorzugt Aramidfasern in Frage kommen. Aus dem gleichen Material können die Wulstverstärker 5 aufgebaut sein. Durch die Verwendung von Kunststoffasern in den Wulstverstärkern 5 werden Anscheuerprobleme im Bereich der Felgenhörner vermindert. Die Wulstkerne 3, die hexagonal, bei Bedarf aber auch rund oder viereckig ausgebildet sein können, bestehen wie auch die Karkasse 1 aus Aramidfäden. Die Fäden werden in Umfangsrichtung zu einem Kernpacket gewickelt.

Im Falle eines Reifens für Pkw kann man regelmäßig auf die Wulstverstärker 5 verzichten und die Wulstkerne 3 geringer dimensionieren und z. B. mit einem runden Querschnitt versehen. Weiterhin genügt es bei Pkw-Reifen in der Regel eine geringere Anzahl von Karkasslagen vorzusehen, sowie die Gürtelverstärkung 7 dünner auszubilden.

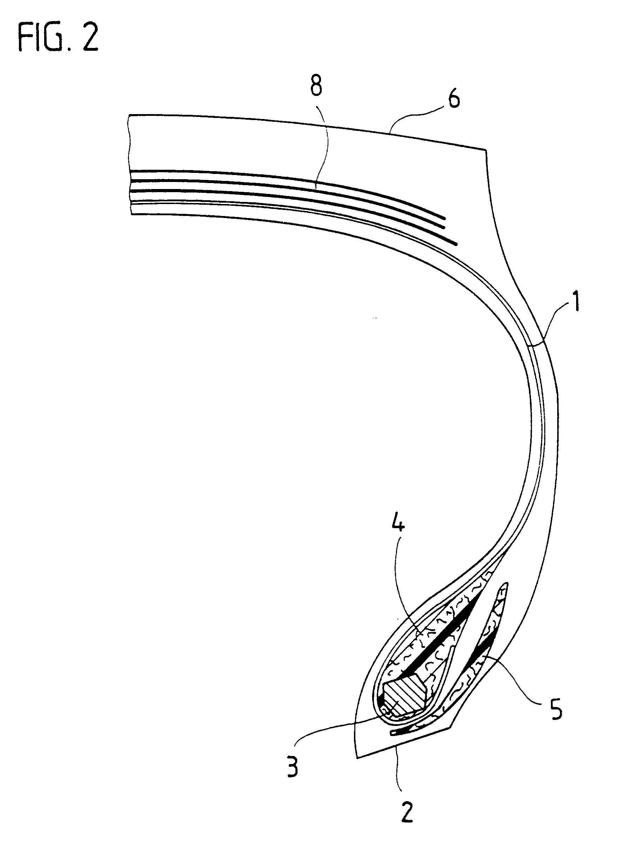

Der Reifen der Fig. 2 stimmt bis auf die Gürtelverstärkung 7 mit dem in Fig. 1 dargestellten überein. Anstelle einer Gürtelverstärkung 7 aus kunstfaserverstärktem Gummi enthält der Reifen nach Fig. 2 einen dreilagigen Gürtel 8, wobei jede Lage als Festigkeitsträger Aramidfäden bzw. Aramidcorde enthält. Bevorzugt verlaufen die Aramidcordfäden innerhalb einer Lage parallel zueinander jedoch schräg zur Reifenumfangsrichtung, wobei sie mit der Reifenumfangsrichtung Winkel zwischen 15 und 70° einschließen. Die Cordgewebe benachbarter Lagen bilden in üblicher Weise einen Kreuzverband. Zur besseren Haftung der Aramidfäden bzw. -corde im Reifen sind diese mit einer Gummierungsschicht ummantelt. Die Aramidfäden bzw. -corde weisen einen Durchmesser von 0,7 bis 2 mm auf und liegen in einer Fadendichte von 40 bis 80 Fäden pro 10 cm vor.

Bei Bedarf kann der Gürtel 8 selbstverständlich auch aus nur zwei Lagen oder aber aus vier bis fünf Lagen aufgebaut sein. Es sollte angemerkt werden, daß der Gürtel 8 auch durch Spulung eines Aramidcordfadens oder bevorzugt eines Materialstreifens mit mehreren Aramidcordfäden erzeugt werden kann. Dabei wird der Materialstreifen in mehreren dicht an dicht liegenden oder sich überlappenden Windungen gewickelt.

## Patentansprüche

1. Durch Konfektionierung hergestellter Fahrzeugluftreifen, insbesondere Reifen für Nutzfahrzeuge, mit einer ein- oder mehrlagigen Festigkeitsträgerkarkasse (1), die in den Wülsten (2) durch Umschlingen von Wulstkernen (3) verankert ist, mit Kernprofilen (4) in den Wülsten (2), mit einem Laufstreifen (6) und mit einer Gürtelverstärkung (7) zwischen Karkasse (1) und Laufstreifen (6),
**dadurch gekennzeichnet,**
daß die Karkasse (1) aus einem Aramidcordgewebe besteht, daß die Wulstkerne (3) aus Aramidfäden aufgebaut sind und daß die Gürtelverstärkung (7) sowie die Kernprofile (4) aus kunstfaserverstärktem Gummi bestehen.

2. Durch Konfektionierung hergestellter Fahrzeugluftreifen, insbesondere Reifen für Nutzfahrzeuge, mit einer ein- oder mehrlagigen Festigkeitsträgerkarkasse (1), die in den Wülsten (2) durch Umschlingen von Wulstkernen (3) verankert ist, mit Kernprofilen (4) in den Wülsten (2), mit einem Laufstreifen (6) und mit einer Gürtelverstärkung (7) zwischen Karkasse (1) und Laufstreifen (6), dadurch gekennzeichnet, daß die Karkasse (1) aus einem Aramidcordgewebe besteht, daß die Wulstkerne (3) aus Aramidfäden aufgebaut sind, daß die Kernprofile (4) aus kunstfaserverstärktem Gummi bestehen und daß der Gürtel (8) aus Aramidfäden bzw. -corden aufgebaut ist.

3. Reifen nach Anspruch 1 oder 2, dadurch gekennzeichnet, daß er je einen Wulstverstärker (5) aufweist, der ebenfalls aus kunstfaserverstärktem Gummi besteht.

4. Reifen nach Anspruch 1, 2 oder 3, dadurch gekennzeichnet, daß im kunstfaserverstärktem Gummi die Kunstfasern in einem Anteil von 10 - 50 Gew.% vorliegen.

5. Reifen nach Anspruch 1, 2 oder 4, dadurch gekennzeichnet, daß die Kunstfasern aus Aramid bestehen.

6. Reifen nach Anspruch 1, 2 oder 4, dadurch gekennzeichnet, daß die Kunstfasern eine Länge von 0,01 bis 6 mm aufweisen.

7. Reifen nach Anspruch 1, 2 oder 4, dadurch gekennzeichnet, daß die Kunstfasern eine Dicke von 5 - 100 µm aufweisen.

8. Reifen nach Anspruch 2, gekennzeichnet durch einen mehrlagigen Gürtel (8), bei dem benachbarte Lagen einen Kreuzverband bilden.

9. Reifen nach Anspruch 2, dadurch gekennzeichnet, daß der Gürtel (8) durch Spulung eines Aramidcordfadens bzw. eines Materialstreifens mit mehreren Aramidcordfäden erzeugt ist.

## Claims

1. Pneumatic vehicle tyre, produced by manufacture, more especially a tyre for commercial vehicles, having a single- or multiple-ply reinforcing member carcase (1), which is secured in the beads (2) by being looped around bead cores (3), having core profiles (4) in the beads (2), having a tread strip (6) and having a belt reinforcement (7) between carcase (1) and tread strip (6), characterised in that the carcase (1) is formed from an aramide cord fabric, in that the bead cores (3) are constructed from aramide filaments, and in that the belt reinforcement (7) and the core profiles (4) are formed from synthetic fibre-reinforced rubber.

2. Pneumatic vehicle tyre, produced by manufacture, more especially a tyre for commercial vehicles, having a single- or multiple-ply reinforcing member carcase (1), which is secured in the beads (2) by being looped around bead cores (3), having core profiles (4) in the beads (2), having a tread strip (6) and having a belt reinforcement (7) between carcase (1) and tread strip (6), characterised in that the carcase (1) is formed from an aramide cord fabric, in that the bead cores (3) are constructed from aramide filaments, in that the core profiles (4) are formed from synthetic fibre-reinforced rubber, and in that the belt (8) is constructed from aramide filaments or cords.

3. Tyre according to claim 1 or 2, characterised in that it has a respective bead reinforcer (5), which is likewise formed from synthetic fibre-reinforced rubber.

4. Tyre according to claim 1, 2 or 3, characterised in that the synthetic fibres are in a proportion of between 10 and 50 % by wt. in the synthetic fibre-reinforced rubber.

5. Tyre according to claim 1, 2 or 4, characterised in that the synthetic fibres are formed from aramide.

6. Tyre according to claim 1, 2 or 4, characterised in that the synthetic fibres have a length of between 0.01 and 6 mm.

7. Tyre according to claim 1, 2 or 4, characterised in that the synthetic fibres have a thickness of between 5 and 100 µm.

8. Tyre according to claim 2, characterised by a multiple-ply belt (8), wherein adjacent plies form a cross-ply bracing.

9. Tyre according to claim 2, characterised in that the belt (8) is produced by winding-up an aramide cord filament or a strip of material having a plurality of aramide cord filaments.

## Revendications

1. Bandage pneumatique de véhicule, fabriqué par confection, en particulier pneu pour véhicules utilitaires, comprenant une carcasse (1) à une ou plusieurs nappes d'éléments résistants, qui est ancrée dans les talons (2) par rabattement autour de tringles (3), des profilés de tringles ou bourrelets (4) dans les talons (2), une bande de roulement (6) et un renfort de ceinture (7) entre la carcasse (1) et la bande de roulement (6), caractérisé en ce que la carcasse (1) est formée d'un tissu de câbles d'aramide, que les tringles (3) sont constituées de fils d'aramide et que le renfort de ceinture (7) ainsi que les profilés de tringles (4) sont en caoutchouc renforcé par des fibres chimiques.

2. Bandage pneumatique de véhicule, fabriqué par confection, en particulier pneu pour véhicules utilitaires, comprenant une carcasse (1) à une ou plusieurs nappes d'éléments résistants, qui est ancrée dans les talons (2) par rabattement autour de tringles (3), des profilés de tringles ou bourrelets (4) dans les talons (2), une bande de roulement (6) et un renfort de ceinture (7) entre la carcasse (1) et la bande de roulement (6), caractérisé en ce que la carcasse (1) est formée d'un tissu de câbles d'aramide, que les tringles (3) sont constituées de fils d'aramide, que les profilés de tringles (4) sont en caoutchouc renforcé par des fibres chimiques et que la ceinture (8) est constituée de fils ou de câbles d'aramide.

3. Pneu selon la revendication 1 ou 2, caractérisé en ce qu'il comprend sur chaque côté un renfort de talon (5) qui est également en caoutchouc renforcé par des fibres chimiques.

4. Pneu selon la revendication 1, 2 ou 3, caractérisé en ce que les fibres chimiques sont présentes dans une proportion de 10 à 50 % en poids dans le caoutchouc renforcé par des fibres chimiques.

5. Pneu selon la revendication 1, 2 ou 4, caractérisé en ce que les fibres chimiques sont en aramide.

6. Pneu selon la revendication 1, 2 ou 4, caractérisé en ce que les fibres chimiques ont une longueur de 0,01 à 6 mm.

7. Pneu selon la revendication 1, 2 ou 4, caractérisé en ce que les fibres chimiques ont une épaisseur de 5 à 100 µm.

8. Pneu selon la revendication 2, caractérisé par une ceinture (8) en plusieurs nappes, dans laquelle les nappes voisines ont une disposition croisée entre elles.

9. Pneu selon la revendication 2, caractérisé en ce que la ceinture (8) est formée par bobinage d'un fil de câble d'aramide ou d'une bande de matériau comportant plusieurs fils de câble d'aramide.
